# EUROPEAN PATENT APPLICATION

(11) **EP 4 847 112 A1**
(43) Date of publication of application: **02.12.2026**
(21) Application number: 26166868.5
(22) Date of filing: 23.03.2026
(51) Int. Cl.: B01D 53/04, B01D 53/00, B01D 53/22, B01D 53/26, C10L 3/10

(54) **PLANT FOR THE PRODUCTION OF BIOMETHANE**

(30) Priority: 28.05.2025 IT 202500012367
(71) Applicant: AB Impianti Srl, 25034 Orzinuovi (BS) (IT)
(72) Inventor: CALZAVACCA, Enrico, 25034 ORZINUOVI (BS) (IT); CAPRA, Federico, 43019 SORAGNA (PR) (IT); MONTICELLI, Egidio, 25121 BRESCIA (BS) (IT)
(74) Representative: De Santis, Giovanni

(57) **Abstract**

Plant (100) for the production of biomethane from landfill biogas comprising:
- one or more tanks (18) each containing adsorbent media suitable for adsorbing one or more undesired pollutants from biogas streams (F) received in input;
- one first membrane-based gas separation stage (6A) which receives in input said biogas streams (F) from said one or more tanks (18) and separates them into a first retentate stream (R1) enriched in biomethane and a first permeate stream (P1) enriched at least in carbon dioxide (CO2);
- one cooling device (6D) which receives in input and cools said first retentate stream (R1);
- a second membrane-based gas separation stage (6B) which receives in input said first cooled retentate stream (R1) and separates it into a second retentate stream (R2) further enriched in biomethane and a second permeate stream (P2) further enriched at least in carbon dioxide (CO2);
- a cryogenic distillation stage (8) which receives said second retentate stream (R2) in input and distills it to thereby obtain one or more biomethane streams (8.1, 8.2).

## Description

The present invention relates to a plant for the production of biomethane.

The plant according to the invention is particularly suitable for producing biomethane through upgrading of landfill biogas and it will be described herein with reference to such an application without for this reason limiting its possible fields of application. Biomethane has been used for several years as an energy source similar to methane obtained from natural gas. In particular, biomethane obtained from upgrading of biogas is mainly constituted by methane (generally > 94%), however it has a significantly lower environmental impact compared to the methane obtained from natural gas.

Biogas is generated from the fermentation of the organic fraction of unsorted waste, such as, for example, waste situated in landfills, and it is a clean and renewable energy source.

Indeed, biomethane presents lower CO2 emissions compared to the ones obtained with methane derived from fossil energy sources, due to its renewable nature and to the purification process through which it is obtained.

The upgrading process consists specifically in the concentration of the biomethane contained in the biogas.

Such process is significantly complex due to the presence of undesired pollutants inside the biogas, such as nitrogen (up to 30%), oxygen (up to 6%), volatile organic compounds (VOC), hydrogen sulfide (H2S), carbon dioxide (CO2), siloxanes.

In particular, the presence of nitrogen and oxygen is due to the air, which infiltrates into the landfill; this happens because of the non-perfect waterproofness of a landfill coverage and because it is recommended to maintain a slight depression in the landfill to be able to extract the biogas.

Consequently, obtaining biomethane from landfill biogas results expensive and difficult to implement.

The aim of the present invention is to obtain a plant through which it is possible to obtain biomethane in an effective and optimized way (or however in an alternative way) with respect to known solutions.

This aim, and others that will possibly result in the following description are reached by a plant for the production of biomethane from landfill biogas, the plant comprising:
- one or more tanks each containing adsorbent media suitable for adsorbing one or more undesired pollutants from biogas streams received in input;
- at least one first membrane-based gas separation stage configured to receive in input said biogas streams from said one or more tanks and separate them into a first retentate stream enriched in biomethane and a first permeate stream enriched at least in carbon dioxide;
- at least one cooling device suitable for receiving in input and cooling said first retentate stream;
- at least a second membrane-based gas separation stage configured to receive in input said first cooled retentate stream and separate it into a second retentate stream further enriched in biomethane and a second permeate stream further enriched at least in carbon dioxide;
- a cryogenic distillation stage configured to receive said second retentate stream in input and distill the second retentate stream received to thereby obtain one or more biomethane streams.

According to some possible examples, the plant for the production of biomethane from landfill biogas according to the present invention may comprise one or more of the following features, which may be combined in any technical feasible combination:
- at least said first membrane gas separation stage, second membrane gas separation stage, and cooling device are configured to reduce the content of carbon dioxide in said second retentate stream to less than 50 ppm;
- a compression stage which compresses the biogas streams flowing from said one or more reservoirs;
- a further cooling device which pre-cools said biogas streams prior to feeding the biogas streams into said first membrane-based gas separation stage;
- the cryogenic distillation stage further comprises at least one cryogenic distillation column configured to provide said one or more biomethane streams as an output.
- a dehumidification stage configured to receive in and absorb water contained in said second retentate stream;
- the cryogenic distillation stage further comprises one or more heat exchangers configured to further cool the second retentate stream dehumidified by the dehumidification stage by means of the one or more biomethane streams prior to feeding the second dehumidified retentate stream into the cryogenic distillation column;
- the cryogenic distillation stage further comprises one or more refrigeration cycles, each of the one or more refrigeration cycles being configured to tap, at a respective first height, at least a portion of the second retentate stream dehumidified by the dehumidification stage fed into the cryogenic distillation column, and to cool and feed the second dehumidified retentate stream back along the cryogenic distillation column at a respective second height;
- the cryogenic distillation column is configured to derive from the second retentate stream dehumidified by the dehumidification stage and further cooled by the one or more heat exchangers at least a first stream containing liquid biomethane tapped from the bottom of the cryogenic distillation column and sent to the second heat exchanger, and a second stream containing gaseous biomethane tapped from the head of the cryogenic distillation column and sent to the first heat exchanger;
- the cryogenic distillation stage further comprises one or more refrigeration cycles, each of the one or more refrigeration cycles being configured to cool the retentate stream fed into the cryogenic distillation column by operating with a working fluid separate from said retentate stream;
- the cryogenic distillation stage further comprises one or more heat exchangers configured to further cool the second retentate stream output from the second membrane-based gas separation stage by means of said one or more biomethane streams prior to feeding the further cooled second retentate stream into said cryogenic distillation column;
- a purification stage configured to receive in input said biogas streams from said one or more tanks and further decrease the amount of said one or more undesired pollutants in said biogas streams.

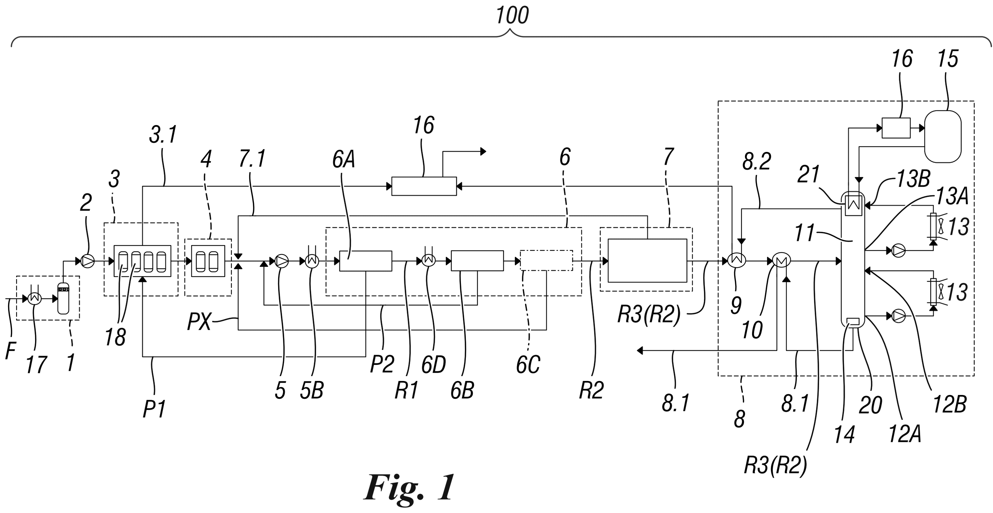

Further features and advantages will appear in the following detailed description, given by way of non-limiting example, with reference to FIG.1 which is a flowchart schematically illustrating possible embodiments of a plant according to the invention.

It should be noted that in the following detailed description, identical or similar components, from a structural and/or functional point of view, can have the same or different reference numbers, independently on the fact that they are shown in different embodiments of the present invention or in separate parts.

It should also be noted that, with the purpose of clearly and concisely describing the present invention, what is represented in the Figure is not necessarily up to scale and some features of the description can be shown in a somehow schematic form. Moreover, when the term "configured", or "shaped", or "adapted", or a similar term is used in the present document, with reference to any component as a whole, or to any part of a component or combination of components, it should be intended that such term means and correspondingly comprises the structure and/or the configuration and/or the shape and/or the positioning.

In particular, when such terms are referred to hardware or software electronic means, they should be intended as including circuits or parts of electronic circuits, as well as software/firmware, such as for example algorithms, routines, and programs in general, running and/or resident in whatever storage support.

In addition, terms as "upstream", "downstream" are respectively referred to the positioning, spatial or temporal, preceding and following with respect to a specific considered component or element, or related to the gas stream in the plant.

Moreover, in the present description and in the following claims, the ordinal numbers first, second, et cetera, will be used for the sake of illustrative clarity and they should not be intended in any way as limiting for any reason, and that the order should exactly be the one in the described sequence (first, second, etc.) with reference to the illustrated example embodiments.

Figure 1 schematically shows some possible embodiments of a plant for the production of biomethane through upgrading of biogas, e.g. landfill biogas, indicated with the overall reference number 100 (hereinafter, for the sake of simplicity, plant 100).

The plant 100 receives in input biogas streams F coming, for example, from a landfill.

Firstly, there is carried out a purification process (at least partial) of the biogas from undesired pollutants, such as VOCs, H2S and siloxanes, performed through an adsorbing system 3 of undesired pollutants, which receives in input such biogas stream F.

The adsorbing system 3 comprises or is constituted by one or more tanks 18 each containing adsorbent media suitable for adsorbing one or more undesired pollutants from the biogas streams received in input.

For example, in a possible embodiment, the adsorbing media cut down one or more among VOCs, H2S and siloxanes present in the biogas streams.

In a possible embodiment, the adsorbing media contained in the tanks 18 include or are constituted by one or more active carbon beds.

In another possible embodiment, the adsorbing media contained in the tanks 18 include or are constituted by one or more beds made of different adsorbent materials.

The gas stream in output from the adsorbing system 3 undergoes a first step of the upgrading process making it flow through a membrane-based gas separation system 6 wherein especially the separation of carbon dioxide (CO2) from the rest of the biogas takes place. Moreover, an advantage obtained through such step of membrane-based gas separation 6 lies in the partial removal of oxygen (between 40 and 90%) from the biogas stream in output from the one or more tanks 18.

As it will result more in detail from the following description, a further oxygen removal will occur in the last step of the process.

In the plant 100 according to the present invention, the membrane-based gas separation system 6 comprises at least a first membrane-based gas separation stage 6A and a second membrane-based gas separation stage 6B, and at least a cooling device 6D placed between the two stages 6A and 6B.

In particular, as illustrated in Figure 1, the biogas stream in output from the one or more tanks 18 is sent in input to and flows through the first membrane-based gas separation stage 6A which is configured to separate such stream in a first retentate stream R1 enriched at least in biomethane (CH4) and in a first permeate stream P1 enriched at least in CO2.

In a possible embodiment, the adsorbent media contained in the tanks 18 are periodically and cyclically regenerated by way of the flowing of a gas stream; for example, as illustrated in Figure 1, the first permeate stream P1 can be applied to that aim, possibly being preheated before entering inside the tank (or tanks) 18 to be regenerated.

The gas stream used for the regeneration of the adsorbing elements and loaded with pollutants in output from the regenerated tank 18 (stream 3.1) is sent for example to an oxidation system 16, e.g. a flame or a Regenerative Thermal Oxidizer (RTO) in order to be disposed.

Usefully, in the plant 100 according to the invention, the retentate stream R1 in output from the first membrane-based gas separation stage 6A is sent to the cooling device 6D and cooled down properly, for example to a temperature of about -15/- 20°C.

For example, such cooling device 6D can include or be constituted by one or more heat exchangers of any type useful for this purpose.

The cooled down retentate stream R1 is then sent to the second membrane-based gas separation stage 6B.

The second membrane-based gas separation stage 6B is configured to separate the cooled down retentate stream R1 received in input in a second retentate stream R2 furtherly enriched in biomethane and in a second permeate stream P2 furtherly enriched at least in CO2.

In particular, in a possible embodiment, at least the first two membrane stages 6A, 6B and the cooling device 6D are configured in order for the quantity of CO2 present inside the second retentate stream R2 to be sufficiently low, in particular < 50 ppm. In this way, the quality of the second retentate gas stream R2 in terms of CO2 content is acceptable and therefore further adsorbing stages of such gas are not necessary.

Optionally, depending on the specific application, the membrane-based gas separation system 6 can include one or more membrane-based gas separation stages similar to the two stages 6A and 6B; for example, in Figure 1 a third stage 6C is schematically illustrated by means of a dashed line.

In a possible embodiment, the plant 100 further includes a dehumidification stage 7 configured to receive in input and to adsorb water contained in the retentate stream R2 in output from the membrane-based gas separation system 6.

In particular, the dehumidification stage 7 is suitable for removing as much as possible the residual humidity present inside the retentate stream in output from the membrane-based gas separation system.

Such dehumidification stage 7 can include for example one or more beds made of adsorbent material, for example alumina and it allows to obtain a water quantity present inside the retentate stream received in input for example lower than 1 ppm. The beds of adsorbing material can be regenerated, if necessary, with a technique suitable for the purpose, for example channeling a regenerating gas stream inside the stage 7.

The residual content of CO2 in the retentate stream R2 is such that it does not need any effect of further separation in the dehumidification stage 7.

The last step of the process to obtain biomethane from landfill biogas consists of the flowing of the stream in output from the dehumidification system 7, for example the dehumidified retentate stream R3, in a cryogenic distillation stage 8, in order to furtherly separate at least oxygen (already partially adsorbed in the membrane-based gas separation stage 6) and nitrogen from the biomethane that has to be extracted.

In the example described below, reference is made to the treatment of the dehumidified retentate stream in output from the dehumidification stage 7, indicated in FIG.1 by the reference R3.

Whenever the dehumidification stage 7 for any reason is not used in a plant 100, what will be described hereinafter has to be intended applicable to the second retentate stream R2 in output directly from the membrane-based gas separation stage 6.

In particular, the dehumidified retentate stream R3 is sent to the cryogenic distillation stage 8, suitable for the distillation of said dehumidified retentate stream R3 deriving from this process one or more streams containing biomethane, for example a first stream containing (at least mainly) liquid methane 8.1, and a second stream containing a certain quantity of methane at the gaseous state 8.2.

Such a cryogenic distillation 8 exploits the different boiling points of the substances which constitute the dehumidified retentate stream R3, such as oxygen, nitrogen and biomethane. By cooling down such dehumidified retentate stream R3 to a temperature lower than the biomethane boiling point, but higher than the oxygen and nitrogen boiling points, these latter will mainly remain at the gaseous state, while the biomethane mainly changes to the liquid state. Such a difference of state of matter allows to separate gaseous oxygen and nitrogen from the liquid biomethane. According to a possible embodiment, the cryogenic distillation stage 8 comprises at least a cryogenic distillation column 11 which is configured in order to provide in output the one or more biomethane streams, e.g. the first stream 8.1, and the second stream containing methane at the gaseous state 8.2.

In a possible embodiment, the cryogenic distillation stage 8 further comprises one or more heat exchangers, for example a first exchanger 9 and a second exchanger 10, configured to further cool down the dehumidified retentate stream R3 (or directly the stream R2), through the one or more biomethane streams, before it enters the cryogenic distillation column 11.

According to a possible embodiment, the cryogenic distillation stage 8 further comprises one or more refrigeration cycles, for example two refrigeration cycles 12 and 13. In a first possible configuration, each of the refrigeration cycles is configured in order to tap, at a respective first height, for example 12A and 13A, at least a part of the retentate stream (directly the retentate stream R2 or the dehumidified retentate stream R3 if the dehumidification stage 7 is used) in input to the cryogenic distillation column 11, cool it down and reintroduce it along the cryogenic distillation column 11 at a respective second height, for example 12B and 13B.

In a second possible configuration, the refrigeration cycles 12 and 13 work by cooling the stream (directly the retentate stream R2 or the dehumidified retentate stream R3 if the dehumidification stage 7 is used) introduced in the cryogenic distillation column 11 by operating with a working fluid normally separated from the retentate stream R2 (or R3) itself.

According to a possible embodiment, the cryogenic distillation stage 8 further comprises a component (boiler) located at the bottom of the distillation column 11, through which the gas mixture contained inside the column itself is heated up, in order to favor the evaporation of the more volatile compounds (e.g. nitrogen and oxygen).

Such heat can be provided for example through heat exchangers with a thermal recovery from hot streams (for example but not only from the stream R2 or R3) or by electric heaters.

Such component is schematically indicated in FIG.1 by the reference number 14.

In particular, the cryogenic distillation column 11 is configured to derive from the dehumidified and furtherly cooled down retentate stream R3 (or the furtherly cooled stream R2 if the dehumidification stage 7 is not used) at least a first stream mainly containing liquid biomethane 8.1, which is tapped from the bottom 20 of the cryogenic distillation column 11 and is sent to the second heat exchanger 10, and a second gaseous stream containing O2 and N2 and also gaseous biomethane 8.2, which is tapped from the top 21 of the cryogenic distillation column 11 and is sent to the first heat exchanger 9.

With the definition of "mainly", it is to be intended that the quantity of biomethane present in the stream 8.1 is higher than 50%, preferably higher than the 70%, more preferably higher than the 90%.

In practice, the retentate stream R2 in output from the membrane-based separation system 6, and which has passed through the dehumidification stage 7 when in use, passes through the first heat exchanger 9 and the second heat exchanger 10, and it is initially cooled down, for example to a temperature between around -120°C and -155°C, which causes partial liquefaction of it. Such dehumidified and then cooled down retentate stream R3 is sent in input to the cryogenic distillation column 11, which allows to separate, at least in part, the biomethane from oxygen and nitrogen, exploiting the different boiling point of such molecules. Indeed, biomethane has a boiling point equal to about -161.5°C, higher than oxygen and nitrogen, having boiling points equal to about -182.9°C and -192.8°C, respectively.

In this way, by sufficiently decreasing the temperature of the cooled down retentate stream, the liquefaction of the biomethane is caused, but not of oxygen and nitrogen, which mainly remain at the gaseous state.

Due to the higher weight of a liquid with respect to a gas, the liquefied biomethane will precipitate at the bottom 20 of the cryogenic distillation column 11, while oxygen and nitrogen at the gaseous state (and only gaseous methane to a minor extent) will flow towards the top 21 of the cryogenic distillation column 11.

The decrease in temperature of the dehumidified and cooled down retentate stream R3 inside the distillation column 11 occurs for example through the use of the refrigerating cycles 12 and 13.

In the illustrated exemplary embodiment, as indicated above, two refrigerating cycles are used, but the use of a different number of such refrigerating cycles is not excluded, to reach the desired aim in further possible embodiments.

Each refrigerating cycle 12 and 13 has in input a portion of fluid tapped from the cryogenic distillation column 11 at a first height 12A and 13A, respectively; such a tapped fluid is compressed, successively cooled down and then reintroduced at a second height 12B and 13B.

The head 21 of the cryogenic column 11, that is the highest point, is therefore the point of the cryogenic distillation column 11 having the lowest temperature.

Therefore, in output from the head 21 of the cryogenic distillation column there is the gaseous stream 8.2 enriched of oxygen and nitrogen and also containing a percentage of methane which can arrive for example up to 15%.

The gaseous flow 8.2 rich of oxygen and nitrogen is sent to the first heat exchanger 9 and used to cool down the dehumidified retentate R3 in output from the membrane-based gas separation system 6 and which has passed through the dehumidification stage 7.

Lastly, the gaseous stream 8.2 is sent for example to the oxidation system 16 to be disposed.

In some embodiments, such oxygen and nitrogen-rich gaseous stream 8.2 can be used to increase the separation efficiency of the membranes of the membrane-based gas separation stages.

In some embodiments, such oxygen and nitrogen-rich gaseous stream 8.2 can be used for the regeneration of the adsorbent media contained in the tanks 18, possibly preheated before being entered inside the tank(s) 18 to be regenerated.

The liquid stream of purified biomethane 8.1 in output from the bottom 20 of the cryogenic distillation column 11 is sent to the second heat exchanger 10 and it is used, similarly to the stream 8.2, to cool down the dehumidified retentate stream R3 in output from the membrane-based gas separation system 6 and which has passed through the dehumidification stage 7 (or to cool down directly the retentate stream R2 in output from the membrane-based gas separation system 6 if the dehumidification stage 7 is not used).

In a possible embodiment, the purified biomethane stream 8.1 is subsequently sent to a compression system and subsequently to a gas grid (not shown in the Figure). In some possible embodiments, due to the excess of purity of the stream 8.1, and to maximize the biomethane quantities originating from the landfill biogas, part of the stream 8.2 is added to the stream 8.1 and used as final product.

Lastly, the biomethane-rich stream 8.2 can be fed into the grid to be used as an energy source.

In a possible different embodiment, the final product is liquefied biomethane. In this case the purified biomethane stream 8.1, in output from the bottom 20 of the cryogenic distillation column 11, is sent to a bio-LNG storage system, without being sent to the heat exchanger 10. In this possible embodiment, a refrigerating cycle provides cold to the heat exchanger 10.

According to a possible embodiment, the plant 100 can further include a tank 15 containing liquid nitrogen and a closed circuit configured to feed such liquid nitrogen at the top 21 of the cryogenic distillation column 11 and channel the gaseous nitrogen in output from the top 21 of the cryogenic distillation column 11 towards a refrigerating cycle 16 acting on the nitrogen and therefore towards the tank 15.

The tank 15 of liquid nitrogen works as an auxiliary cold source in the step of starting the plant, but usually it is not used for the cooling down of the retentate stream inside the cryogenic distillation system 8.

In further embodiments, the system is provided with a tank 15 containing liquid nitrogen and an open circuit configured to feed said liquid nitrogen at the top 21 of the cryogenic distillation column 11 and to channel gaseous nitrogen towards the atmosphere in output from the top 21 of the cryogenic distillation column 11.

In further embodiments, some steps/stages can be added to this process to maximize the efficiency.

In particular, upstream of the undesired pollutants adsorbing stage 3 an initial dehumidification stage for the biogas stream F can be used, indicated in the example of FIG.1 with the reference number 1.

As illustrated, this dehumidification stage 1 includes for example a heat exchanger 17 which uses water, for example, as cooling fluid. In this step, the biogas stream F flows inside the heat exchanger 17 and, due to the cooling down, the humidity condenses, being consequently separated from the biogas and then disposed.

In a possible embodiment, downstream of this dehumidification stage 1, a blower 2 channels the dehumidified biogas stream towards the undesired pollutants adsorbing stage 3 previously described.

In a possible embodiment, downstream of this latter, due to the possible residual presence of some undesired pollutants, it is possible to use a further finishing stage 4, made for example by one or more active carbon beds or by another adsorbent material.

In this way, the residual undesired pollutants are furtherly cut down, guaranteeing a higher purity of the biogas stream F in input to the membrane-based gas separation system 6.

To improve and optimize the biomethane separation from the other components, and in particular from carbon dioxide, before the biogas stream F in output from the adsorbing system 3 (or from the finishing stage 4 whenever used) enters the membrane-based gas separation system 6, it is channeled in a compression stage, comprising, for example, a compressor 5, which increases the pression, for example to a value in the range of 10-18 barg.

In some possible embodiments, also the second permeate stream P2 previously mentioned and/or further permeate streams in output from further membrane-based separation stages used, as for example the stage 3C (such further permeate stream is indicated in the Figure by the reference PX), is recirculated upstream of the compressor 5 and compressed by the compressor and sent back into the membrane-based gas separation system 6.

Moreover, the regenerating stream possibly used to regenerate the dehumidification stage 7 and in output from it (stream 7.1) can be recirculated upstream of the compressor 5 and compressed by the compressor and sent back to the membrane-based gas separation system 6.

In a possible embodiment, after the compression in the compressor 5, the compressed biogas stream undergoes a pre-cooling, by letting it flow through a further cooling device 5B suitable for cooling down the biogas streams F before entering the membrane-based gas separation system 6.

Such pre-cooling is useful to improve the performance of the membrane-based gas separation system 6, by maximizing the separation of the methane from other gaseous components, in particular from carbon dioxide.

It has been practically seen as the plant 100 according to the invention properly fulfills the intended purpose as it allows to obtain biomethane in an effective and optimized way.

Clearly, without prejudice to the principle of the invention, the embodiments and the particulars of embodiments can be widely varied with respect to what has been described and illustrated by way of non-limiting example, without departing from the scope of protection of the present invention defined in the appended claims, included any possible combination, also partial, of the previously described embodiments.

## Claims

1. Plant (100) for the production of biomethane from landfill biogas, the plant (100) comprising:
- one or more tanks (18) each containing adsorbent media suitable for adsorbing one or more undesired pollutants from biogas streams (F) received in input;
- at least one first membrane-based gas separation stage (6A) configured to receive in input said biogas streams (F) from said one or more tanks (18) and separate them into a first retentate stream (R1) enriched in biomethane and a first permeate stream (P1) enriched at least in carbon dioxide (CO2);
- at least one cooling device (6D) suitable for receiving in input and cooling said first retentate stream (R1);
- at least a second membrane-based gas separation stage (6B) configured to receive in input said first cooled retentate stream (R1) and separate it into a second retentate stream (R2) further enriched in biomethane and a second permeate stream (P2) further enriched at least in carbon dioxide (CO2);
- a cryogenic distillation stage (8) configured to receive said second retentate stream (R2) in input and distill the second retentate stream received to thereby obtain one or more biomethane streams (8.1, 8.2).

2. Plant (100) according to claim 1, wherein at least said first membrane gas separation stage (6A), second membrane gas separation stage (6B), and cooling device (6D) are configured to reduce the content of carbon dioxide (CO2) in said second retentate stream (R2) to less than 50 ppm.

3. Plant (100) according to one or more of the preceding claims, comprising a compression stage (5) suitable for compressing said biogas streams flowing from said one or more reservoirs (18).

4. Plant (100) according to one or more of the preceding claims, comprising a further cooling device (5B) suitable for pre-cooling said biogas streams (F) prior to feeding into said first membrane-based gas separation stage (6A).

5. Plant (100) according to one or more of the preceding claims, wherein said cryogenic distillation stage (8) further comprises at least one cryogenic distillation column (11) configured to provide said one or more biomethane streams (8.1, 8.2) as an output.

6. Plant (100) according to one or more of the preceding claims, further comprising a dehumidification stage (7) configured to receive in and absorb water contained in said second retentate stream (R2).

7. Plant (100) according to claim 6 when depending on claim 5, wherein said cryogenic distillation stage (8) further comprises one or more heat exchangers (9, 10) configured to further cool the second retentate stream dehumidified by the dehumidification stage (7) by means of said one or more biomethane streams (8.1, 8.2) prior to feeding the second dehumidified retentate stream into said cryogenic distillation column (11).

8. Plant (100) according to claim 7, wherein said cryogenic distillation stage (8) further comprises one or more refrigeration cycles (12, 13), each of said one or more refrigeration cycles (12, 13) being configured to tap, at a respective first height (12A,13A), at least a portion of the second retentate stream dehumidified by the dehumidification stage (7) fed into the cryogenic distillation column (11), and to cool and feed the second dehumidified retentate stream back along the cryogenic distillation column (11) at a respective second height (12B, 13B).

9. Plant (100) according to one or more of claims 5 to 9, wherein said cryogenic distillation column (11) is configured to derive from the second retentate stream dehumidified by the dehumidification stage and further cooled by the one or more heat exchangers at least a first stream containing liquid biomethane (8.1) tapped from the bottom (20) of the cryogenic distillation column (11) and sent to the second heat exchanger (10), and a second stream containing gaseous biomethane (8.2) tapped from the head (21) of the cryogenic distillation column (11) and sent to the first heat exchanger (9).

10. Plant (100) according to claim 5, wherein said cryogenic distillation stage (8) further comprises one or more refrigeration cycles (12, 13), each of said one or more refrigeration cycles (12, 13) being configured to cool the retentate stream fed into the cryogenic distillation column (11) by operating with a working fluid separate from said retentate stream.

11. Plant (100) according to claim 5, wherein said cryogenic distillation stage (8) further comprises one or more heat exchangers (9, 10) configured to further cool the second retentate stream (R2) output from the second membrane-based gas separation stage (6B) by means of said one or more biomethane streams (8.1, 8.2) prior to feeding the further cooled second retentate stream (R2) into said cryogenic distillation column (11).

12. Plant (100) according to one or more of the preceding claims, further comprising a purification stage (4) configured to receive in input said biogas streams from said one or more tanks (18) and further decrease the amount of said one or more undesired pollutants in said biogas streams.
